# EUROPEAN PATENT APPLICATION

(11) **EP 2 535 560 A1**
(43) Date of publication of application: **19.12.2012**
(21) Application number: 11739334.8
(22) Date of filing: 31.01.2011
(51) Int. Cl.: F03D 3/00

(54) **BRAKING EQUIPMENT FOR VERTICAL SHAFT WIND GENERATOR AND BRAKING METHOD THEREFOR**

(30) Priority: 08.02.2010 CN 201019114063
(71) Applicant: National Wind Energy Co. Ltd., Pinggu District, Beijing 101206 (CN)
(72) Inventor: JIANG, Dalong, Beijing 101206 (CN); WANG, Jianhui, Beijing 101206 (CN)
(74) Representative: Decamps, Alain René François
(86) International application number: PCT/CN2011/000175
(87) International publication number: WO 2011/095055

(57) **Abstract**

The present invention discloses a braking device used for vertical axis wind turbine as well as its braking method. The braking device used for vertical axis wind turbine is composed of brake disk in connection with the generator rotor, brake support installed on a fixed revolution axis as well as mechanical brake installed on the aforementioned brake support. As a braking method for using the braking device of for vertical axis wind turbine, when braking is required, the mechanical brakes will close their caliper jaws, making the upper and lower brake shoes to press on the brake disk, putting the generator rotor on brake; when it is necessary to release the brake, the mechanical brakes will open the caliper jaws, allowing the generator rotor to rotate. The braking device to be used for vertical axis wind turbine as well as the braking method for using such braking device according to the present invention help avoid emergency shutdown at high wind velocity, which not only improves the safety of the vertical axis wind turbine, but also avoids too big a impact on the power grid.

## Description

### Technical field

The present invention relates to a braking device to be used for vertical axis wind turbine as well as the braking method of the braking device.

### Background art

Wind energy is a renewable energy having the broadest application prospect next to hydraulic energy, which as received a great attention from the various countries in the world.

Per the direction of revolution axis, wind turbines can be divided into two types, namely, horizontal axis and vertical axis. Horizontal axis wind turbine is the wind turbine that is currently widely applied in the world, however, this type of wind turbine has such shortcomings as complex structure, high manufacturing and maintenance cost, etc. In comparison, modified vertical axis wind turbine has such advantages as a low starting wind velocity, a relatively high wind energy utilization ratio and a low noise level, etc., thus, having an even broader market application prospect.

To avoid any damage to the turbo-generator unit resulted from sudden increase of wind power during operation of a wind turbine, it is necessary to take a certain braking measures. In the existing heavy-duty horizontal axis wind turbine, braking may be provided by means of yawing system, aerodynamic brake and mechanical brake, etc. Since a vertical axis wind turbine cannot reduce its windward surface area through yawing, a braking device with a bigger braking moment is required to ensure the safety.

To solve the braking problem of vertical axis wind turbines, people came up with some mechanical braking solutions. For example, a Chinese invention patent application with an application number of 200910003965.5 disclosed a braking device to be used for vertical axis as well as its braking method. It comprises a braking device connected with the generator rotor axis or the wind rotor vertical axis, a braking arm or a brake controlled by a brake solenoid valve and friction disk. The braking device includes a brake, brake disk or brake shoe, as well as safety pin and the safety electromagnetic valve for controlling the safety pin. When braking is necessary as the wind velocity exceeds the maximum wind velocity rating of the wind turbine, the braking solenoid valve is started to control the braking arm or braking disk and put the wind turbine on brake through the action of the brake shoe. When braking is not required as the wind velocity is lower than the braking wind velocity, the braking solenoid valve is closed to control the braking arm or the braking disc to retain the initial status.

### Description of the present invention

The purpose of the present invention is to provide another type of braking device to be used for vertical axis wind turbine.

Another purpose of the present invention is to provide a braking method for the braking device to be used for vertical axis wind turbine.

To fulfill the aforesaid purposes of the invention, the braking device to be used for a vertical axis wind turbine of the present invention is composed a brake disk connected with the generator rotor, a brake support installed on a fixed revolution axis as well as a mechanical brake installed on the aforesaid brake support. The said brake disk is co-axial with the generator rotor. And the said mechanical brake is a caliper disk hydraulic brake or pneumatic brake with brake shoes provided above and below the caliper jaw and the friction portion of the brake disk inserted between the upper and lower brake shoes.

The braking device used for vertical axis wind turbine provided by the present invention, wherein the said mechanical brake may be one or multiple brakes, and when multiple mechanical brakes are used, these shall be distributed symmetrically with reference to the revolution central axis of the turbo-generator.

The present invention also provides a braking method for using the braking device of the present invention for vertical axis wind turbine, and when braking is required, the mechanical brakes will close their caliper jaws, making the upper and lower brake shoes to press on the brake disk, putting the generator rotor on brake; when it is necessary to release the braking, the mechanical brakes will open the caliper jaws, allowing the generator rotor to rotate.

The braking device to be used for vertical axis wind turbine as well as the braking method for using such braking device according to the present invention help avoid emergency shutdown at high wind velocity, which not only improves the safety of the vertical axis wind turbine, but also avoids too big a impact on the power grid.

### A brief description of drawings

The following a further detailed description of the present invention in conjunction with the drawings attached as well as the specific embodiments.
Fig. 1 is a cutaway view of a vertical axis wind turbine installed with a braking device provided by the present invention;
Fig. 2 is a schematic illustrating the distribution of multiple mechanical brakes provided along the circumference of a brake disk.

### Detailed description of the preferred embodiments

In the case of existing horizontal axis wind turbine, when the wind velocity exceeds the preset safety range, it is necessary to reduce the rotational speed of the rotor through yawing or any other method, especially when the wind velocity reaches a certain high level, the wind turbine is often forced to shut down after yawing by means of the emergency brake, etc. installed on the drive shaft for the purpose of self protection. However, in the case of a vertical axis wind turbine, yawing cannot reduce the windward surface area at high wind in order to relieve the braking force requirement of the mechanical braking device, instead, mechanical braking is required to improve the braking moment of the power generator in order to reduce and limit the rotational speed, thus, protecting the turbo-generator unit through controlling the input torque of the rotor. When the rotor input torque of a wind turbine is greater than upper limit of the braking moment of the wind turbine, an extra braking force must be provided by the mechanical brake to control the rotational speed of the generator not to exceed the maximum rotational speed for safe operation. An extreme circumstance is when electric energy cannot be outputted due to a failure of the generator or the power grid, under which circumstance, the mechanical braking device is required to carry out an emergency brake of the turbo-generator until it is stopped for the purpose of self protection.

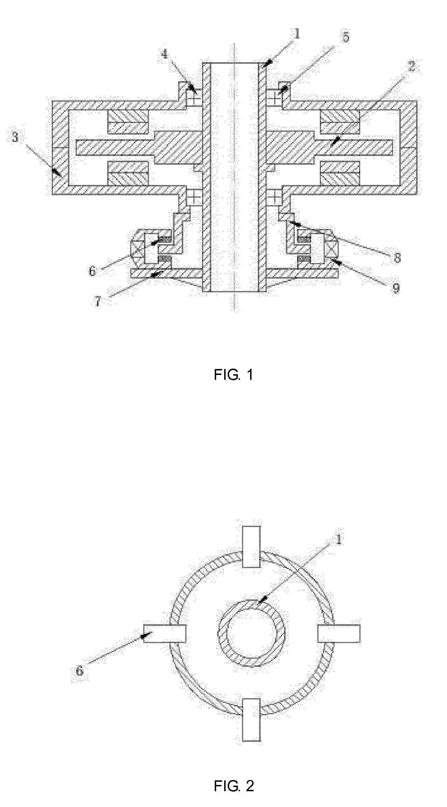

As shown in Fig. 1, a vertical axis wind turbine may utilize a magneto generator structure with its external rotor having no core. The rotor may directly drive the external rotor for power generation. As a direct drive type wind turbine, it is characterized by a low rotational speed and a large torque, therefore, a braking device is required to provide a higher torque.

The present invention adopts a brake disk directly connected with the external rotor, which is helpful for enlarging the braking radius of the brake disk and increasing the braking torque. The present invention also adopts multiple symmetrically distributed brakes, enabling the braking torque to be in direct proportion to the number of brakes used, thus, increasing the braking torque. The present invention adopts caliper disk type structure with brake shoes provided both above and below the caliper jaw and the friction portion of the brake disk inserted between the upper and lower brake shoes, increasing the braking torque by two folds that of the single-faced friction structure.

As shown in Fig. 1, in a vertical axis wind turbine, a brake disk 8 with a Z-shaped cross section is installed at the bottom of a disk type ironless generator with external rotor. And mechanical brakes are installed on the outside of a disk extended outside at the bottom of the brake disk, which are symmetrically distributed along the circumference of the generator. The said mechanical brakes may be hydraulic type or pneumatic type. In the case of hydraulic brakes, a control system is used to control the hydraulic pump for Start/Stop, enabling the brakes to open and close their caliper jaws and vary the braking pressure. Pneumatic brakes utilize a control system to control the electromagnetic valve on the compressed air pipe for Start/Stop, and to regulate the internal air pressure inside the pneumatic brakes, enabling the brakes to open and close their caliper jaws and vary the braking pressure, and the compressed air is supplied from an air compressed.

As shown in Fig. 2, there are 4 mechanical brakes which are symmetrically distributed along the circumference, in reality, one or a number of the aforementioned mechanical brakes may be used. When a number of mechanical brakes are used, they are distributed symmetrically with reference to the central axis of the generator along the generator brake disk, and every two brakes symmetrically arranged with reference to the central axis of the generator often act simultaneously as a pair so as to balance the braking force, reducing the mechanical stress of the components.

When two or more mechanical brakes are utilized, these brakes can be divided into groups for braking according to the braking force requirements. For example, as shown in Fig. 2, if the required braking force is relatively small, only a pair of the upper and lower brakes may be used for braking; when a big braking force is required, four brakes (namely, upper, lower, left and right brakes) may be used simultaneously for braking. Under other circumstances, this method shall also apply.

The above has been a detailed description of the braking device used for vertical axis wind turbine and the braking method provided by the present invention. For the technical personnel from this field, any obvious change to it without getting rid of the substantial spirit of the present invention will constitute an infringement of the patent right of the present invention.

### Industrial applicability

The braking device to be used for vertical axis wind turbine as well as the braking method for using such braking device according to the present invention apply in the field of wind power generation, and help avoid emergency shutdown at high wind velocity, which not only improves the safety of the vertical axis wind turbine, but also avoids too big a impact on the power grid.

## Claims

1. A braking device used for vertical axis wind turbine, wherein the said braking device is composed of brake disk (8) in connection with the generator rotor (3), brake support (7) installed on a fixed revolution axis (1) as well as mechanical brake (9) installed on the aforementioned brake support, and the said brake disk (8) is co-axial with the generator rotor, and the said mechanical brakes are caliper disk type hydraulic brakes or pneumatic brakes with brake shoes (6) provided both above and below their caliper jaws and the friction portion of brake disk (8) inserted between the upper and lower brake shoes.

2. The braking device used for vertical axis wind turbine of Claim 1 wherein there may be one or multiple mechanical brakes (9), and when there are a number of mechanical brakes, these are distributed symmetrically with reference to the rotational central axis of the generator.

3. A braking method for the braking device used for vertical axis wind turbine of Claim 1 wherein when braking is required, the mechanical brakes close their caliper jaws, making the upper and lower brake shoes to press on the brake disk, putting the generator rotor on brake; when it is necessary to release the braking, the mechanical brakes open their caliper jaws to allow the generator rotor to rotate.
